# EUROPÄISCHE PATENTSCHRIFT

(11) **EP 4 008 930 B1**
(45) Veröffentlichungstag und Bekanntmachung des Hinweises auf die Patenterteilung: **28.01.2026**
(21) Anmeldenummer: 21205933.1
(22) Anmeldetag: 02.11.2021
(51) Int. Cl.: F16H 57/08, F16H 57/028, F16H 57/00

(54) **ENTKOPPLUNGSRING FÜR EIN PLANETENGETRIEBE**
DECOUPLING RING FOR A PLANETARY GEAR
BAGUE DE DÉCOUPLAGE POUR UN ENGRENAGE PLANÉTAIRE

(30) Priorität: 02.12.2020 DE 102020131974
(43) Veröffentlichungstag der Anmeldung: 08.06.2022
(73) Patentinhaber: Vibracoustic SE, 69469 Weinheim (DE)
(72) Erfinder: Mueller, Niklas, 79241 Ihringen (DE); Duerre, Markus, 79395 Neuenburg am Rhein (DE)
(74) Vertreter: Patentanwälte Olbricht Buchhold Keulertz

(56) Entgegenhaltungen:
- DE-A1- 102011 075 916
- DE-A1- 102018 107 207
- DE-A1- 3 821 023
- US-A- 5 324 182

## Beschreibung

Die Erfindung betrifft einen Entkopplungsring gemäß Anspruch 1, eine Baugruppe mit den Merkmalen des Anspruchs 6 und ein Planetengetriebe nach Anspruch 7. Planetengetriebe weisen konstruktionsbedingt akustische Nachteile auf. Diese sind zurückführbar auf unterschiedliche Ursachen. Eine Ursache können Schwingungen sein, die durch die Verzahnung der Planetenräder mit dem Hohlrad und/oder dem Sonnenrad entstehen. Diese Schwingungen werden durch das Hohlrad in das Getriebegehäuse eingeleitet, welches wiederum dadurch Luftschall abstrahlt, der als unangenehm oder gar störend empfunden werden kann. Die Schwingungen, die in das Gehäuse eingeleitet werden, können auch in Form von Körperschall auffällig werden. Durch die Rotation der Planetenräder entsteht auf das Hohlrad eine Anregung dritter Ordnung, die ebenfalls Schwingungen in das Gehäuse einleitet. Das Getriebegehäuse, welches aus Aluminium gefertigt sein kann, weist regelmäßig eine sehr niedrige Dämpfung auf und wird durch diese Anregung zu Schwingungen angeregt. Auch diese Schwingungen können sich in hörbarem Luftschall niederschlagen. Dabei treten diese Probleme insbesondere bei dem Typ eines Planetengetriebes mit festem Hohlrad auf.

Der aktuelle Stand der Technik löst dieses Problem mit dem Einsatz von zusätzlichem Dämmmaterial, welches das Getriebegehäuse umgibt. Es wird also bislang nicht die Schwingung als Ursache für Luftschall verhindert, sondern die Wahrnehmbarkeit des Luftschalls. Diese Lösung wird häufig als NVH-Cover (Noise, Vibration, Harshness) bezeichnet und ist aus diversen Gründen in diesem Kontext nachteilig. Neben den hohen Zusatzkosten für eine solche Dämmung muss ein entsprechender Bauraum vorgehalten werden. Zudem ist diese akustische Dämmmaßnahme gleichzeitig eine thermische Dämmung, welche jedoch gerade im Kontext von Getrieben höchst nachteilig ist. Die Dämmung verhindert oder behindert beispielsweise eine notwendige Wärmeabstrahlung. Folglich muss dadurch die Kühlleistung einer das Getriebe kühlenden Maschine erhöht werden, was zu höherem Energieeinsatz und/oder leistungsfähigeren kühlenden Maschinen führt. Das aus dem Stand der Technik bekannte Dokument DE3821023 A1 zeigt einen Entkopplungsring für ein Hohlrad, umfassend einen ringförmigen elastomeren Grundkörper und gleichmäßig zueinander beabstandete und in Radialrichtung vom Grundkörper abragende elastomere Ausformungen, welche parallel zu einer den Entkopplungsring zentral durchsetzenden Zentrallängsachse verlaufen, wobei der Entkopplungsring umfangsseitig eines Hohlrades anordenbar ist.

Der Erfindung liegt daher die Aufgabe zugrunde, ein Mittel zu schaffen, welches Schwingungen besser verhindert, die zur Entstehung von Luftschall führen, insbesondere bei Planetengetrieben. Hauptmerkmale der Erfindung sind in Anspruch 1 angegeben. Ausgestaltungen sind Gegenstand der abhängigen Ansprüche.

Erfindungsgemäß wird ein Entkopplungsring für ein Planetengetriebe vorgeschlagen, umfassend einen ringförmigen elastomeren Grundkörper, und gleichmäßig zueinander beabstandete und in Radialrichtung vom Grundkörper abragende elastomere Ausformungen, welche parallel zu einer den Entkopplungsring zentral durchsetzenden Zentrallängsachse verlaufen, wobei der Entkopplungsring umfangsseitig eines Hohlrades eines Planetengetriebes anordenbar ist.

Kurzgefasst kann mit der vorliegenden Erfindung eine Unterbrechung des relevanten Schwingungstransferpfads zwischen zwei Bauteilen erfolgen. Diese Bauteile können beispielsweise im Kontext eines Planetengetriebes ein Hohlrad und ein Getriebegehäuse sein. Durch die Elastizität des Elastomers in Verbindung mit der Materialdämpfung des Elastomers können die unerwünschten Schwingungen zum einen reduziert und deren Transfer an das andere Bauteil oder weitere Bauteile verhindert werden. Neben der Verbesserung des NVH-Verhaltens ist ein Verzicht auf das oben beschriebene NVH-Cover möglich. Dadurch ist zudem ein Kühlen des Getriebes erheblich vereinfacht, kostengünstiger und ressourcenschonender.

Mittels des Entkopplungsrings können zwei Bauteile, wie beispielsweise ein Hohlrad und ein Gehäuse, in zumindest eine Raumrichtung, jedoch vorzugsweise in sämtliche Raumrichtungen, voneinander entkoppelt werden (torsional, axial, radial). Über das Elastomer gibt es zudem keinen metallischen Kontakt zwischen zwei metallischen Bauteilen, so dass eine Weitergabe des Körperschalls durch das schwingungsblockierende Elastomer optimal unterbrochen wird. Somit kann es nicht zu dem als "Durchklingeln" bekannten Phänomen kommen.

Im Kontext des Planetengetriebes führt die Erfindung zudem zu der Möglichkeit eines konstruktiv einfacher ausgestaltbaren Hohlrades, welches weniger Maßtreue aufweisen kann, durch die umfangsseitige Anordnung des Entkopplungsrings, da das Elastomer Toleranzen ausgleichen kann.

Die Ausformungen können in Radialrichtung nach innen und/oder außen abragen und dienen einem innen- und/oder außenumfangsseitigen Abstützen. Über die Länge der Radialerstreckung der Ausformungen kann die Steifigkeit des Entkopplungsrings eingestellt werden, wobei eine kleine Radialerstreckung zu einem weichen Entkopplungsring führt und mittels einer großen Radialerstreckung ein steifer Entkopplungsring realisierbar ist.

Die Ausformungen können zum Grundkörper separate und mit diesem fest verbundene Teile oder mit dem Grundkörper stoffeinheitlich und einstückig ausgebildet sein.

Erfindungsgemäß weisen die Ausformungen zumindest eine Presspassungsfläche auf, über welche sie presspassend an einem Bauteil, wie einem Gehäuse oder einem Hohlrad, anliegen können. Über die Presspassungsflächen sind die Aussparungen und ggf. der Grundkörper durch ein daran anliegendes Bauteil vorspannbar. In vorteilhafter Weise umfasst jede Ausformung zwei Presspassungsflächen. Denkbar ist, dass von diesen Presspassungsflächen jeweils eine zu jeder Seite einer Längsmittelebene angeordnet ist, vorzugsweise spiegelsymmetrisch dazu. Die Presspassungsflächen können einen ebenen oder gekrümmten Querschnittsverlauf aufweisen.

Gemäß einer Weiterbildung des Entkopplungsrings kann die zumindest eine Presspassungsfläche gegenüber einer Längsmittelebene des Entkopplungsrings um einen Winkel verkippt verlaufen. In der Längsmittelebene liegt auch die Zentrallängsachse. Die Längsmittelebene kann eine Ausformung zentral durchsetzen. Verglichen mit einer Presspassungsfläche, die in der Längsmittelebene liegt, kann mittels einer solchen Verkippung eine größere Elastomerfläche der Ausformung als Presspassungsfläche dienen. Zudem ist dadurch die Herstellbarkeit des daran anliegenden Bauteils erheblich vereinfacht, denn der von den Gegenflächen des Bauteils eingeschlossene Winkel kann somit erheblich größer als 90° sein.

Gemäß einer Weiterbildung des Entkopplungsrings kann/können der Grundkörper und/oder die Ausformungen zumindest eine Freifläche aufweist/aufweisen, welche im Montagezustand einen Hohlraum zumindest abschnittsweise begrenzt/begrenzen. Montagezustand ist diejenige Stellung, in welcher der Entkopplungsring an zumindest einem Bauteil angeordnet ist. An der Freifläche liegt im Montagezustand kein anderes Bauteil an. Die Kontur des Grundkörpers und/oder der Ausformungen können derart ausgestaltet sein, dass in einem lastfreien Zustand oder Montagezustand Hohlräume zu dem anliegenden Bauteil vorhanden sind, in die sich das Elastomer des Grundkörpers und/oder der Ausformungen unter Last eindrücken kann. Damit wird zum einen eine Flexibilität erreicht, zum anderen eine progressive Kennlinie erzeugt. Sobald nämlich der Hohlraum mit Elastomer gefüllt ist, steigt die Steifigkeit an. Damit kann bei kleinen Lasten eine weiche Kennung generiert werden, bei hohen Lasten wird der Verdrehwinkel begrenzt und das Bauteil oder die Bauteile damit vor Überlast geschützt. Zusätzlich oder alternativ können auch die Bauteile, wie das Hohlrad und/oder das Gehäuse, hohlraumerzeugend ausgestaltet sein. Eine Gegenfläche kann beispielsweise gegenüber einer an der Freifläche anliegenden Position zurückversetzt sein, um einen Abstand dazu herzustellen. Gleiches gilt analog entweder zusätzlich oder alternativ für die entsprechende Freifläche. Der Hohlraum kann im Montagezustand zwischen dem Entkopplungsring und einem daran zumindest abschnittsweise anliegenden Bauteil ausgebildet sein. Freiflächen können beispielsweise ausgebildet sein zwischen benachbarten Ausformungen und an einem Ausformungskopf. Auch die Ausformungsflanken können zumindest abschnittsweise eine Freifläche umfassen.

Gemäß einer Weiterbildung des Entkopplungsrings können die Ausformungen eine querschnittliche Außenkontur eines gestreckten Sechsecks aufweisen. Das Sechseck kann in Umfangsrichtung gestreckt sein. Dadurch können die beiden in Umfangsrichtung weisenden kurzen Seiten des Sechsecks unterschiedliche Funktionen erfüllen. Eine der kurzen Seiten kann die gegenüber der Längsmittelebene verkippte Presspassungsfläche aufweisen oder ausbilden. Die jeweils andere der beiden kurzen Seiten kann einen Hinterschnitt ausbilden, welcher den Hohlraum vergrößern kann. Diese kurze Seite kann mit dem Grundkörper beispielsweise eine Hohlkehle ausbilden und/oder einen Winkel einschließen, der höchstens 90° beträgt, vorzugsweise jedoch im Bereich von 90° bis 80° liegt, weiter bevorzugt 85° beträgt. Die Lange freie Seite des Sechsecks kann die Freifläche ausbilden und/oder umfassen und/oder eine Ausformungskopffläche des Ausformungskopfes ausbilden und/oder umfassen.

Gemäß einer Weiterbildung des Entkopplungsrings kann/können der Grundkörper und/oder die Ausformungen zumindest einen Anschlagpuffer aufweisen, wobei der Anschlagpuffer vorzugsweise auf einer Freifläche angeordnet ist oder eine Freifläche umfasst. Ein Anschlagpuffer kann ein gegenüber einem unmittelbaren Nachbarabschnitt verdickter Elastomerabschnitt sein. Der Anschlagpuffer kann stoffeinheitlich und/oder einstückig mit dem Grundkörper bzw. der Ausformungen ausgebildet sein. Der Anschlagpuffer kann die Freifläche alternativ auch selbst ausbilden. Denkbar ist, dass die Ausformungen mehrere Anschlagpuffer aufweisen. Denkbar ist auch, dass jedem Hohlraum zumindest ein Anschlagpuffer zugeordnet ist. Ein Anschlagpuffer kann derart angeordnet sein, dass er in Radialrichtung als Radialanschlagpuffer oder in Axialrichtung als Axialanschlagpuffer puffert. Bei letzterer Variante kann beispielsweise eine Ausformung zumindest einen sich in Längsrichtung erstreckenden und an ihrer Stirnseite angeordneten Anschlagpuffer aufweisen. Dieser Axialanschlagpuffer dient ebenfalls der Isolation, da das Hohlrad beidseitig axial gesichert werden kann. Wären die Stirnseiten beispielsweise metallisch, gäbe es keine elastomere Unterbrechung des Schallpfades.

Erfundungsgemäß umfasst der Entkopplungsring innenumfangsseitig oder außenumfangsseitig einen Trägerring, auf welchem der elastomere Grundkörper mit den Ausformungen angeordnet, vorzugsweise aufvulkanisiert ist. Der Trägerring dient der Formstabilität des Entkopplungsrings, insbesondere bei seiner Montage und erhöht eine seine Steifigkeit. Der Trägerring kann lediglich auf einer seiner beiden in Radialrichtung weisenden Seiten den elastomeren Grundkörper aufweisen, wobei die jeweils andere Seite frei oder elastomerunbedeckt ist. Über diese freie Seite kann der Trägerring mit einem Bauteil verpresst werden. Der Trägerring ist aus einem Metall, vorzugsweise einer Aluminiumlegierung oder einem Stahlblech, oder aus einem Kunststoff gefertigt. Alternativ zum Aufvulkanisieren kann zumindest der Grundkörper separat zum Trägerring hergestellt werden und anschließend an diesem mittels reib- und/oder formschlüssiger Verbindung angeordnet werden.

Erfindungsgemäß umfasst der Trägerring außenumfangsseitige oder innenumfangsseitige Kernzähne und/oder gemäß einer Weiterbildung kann der Entkopplungsring innenumfangsseitige oder außenumfangsseitige Trägerzähne umfassen, wobei das Mengenverhältnis der Kernzähneanzahl zur Trägerzähneanzahl vorzugsweise 1:2 beträgt. Jedem Kernzahn können daher zwei Trägerzähne zugeordnet werden. Die Kernzähne können zu einer Seite des Trägerrings abragend angeordnet sein und die Trägerzähne können zu der anderen Seite abragend angeordnet sein. Die Zähne können von einem Grundkörper des Trägerrings in Radialrichtung abragen. Die Zähne können beispielsweise die querschnittliche Kontur eines Dreiecks, eines Rechtecks oder eines Trapezes aufweisen. Die Zähne können zudem in Längsrichtung verlaufende Presspassungsstege aufweisen. Vorzugsweise weisen nur die Trägerzähne solche Presspassungsstege auf. Die Presspassungsstege verhindern ein nachteiliges vollflächiges Anliegen bei einer Presspassungsverbindung an einem Bauteil. Über die Trägerzähne ist der Trägerring auf ein Bauteil aufpressbar. Die Zähne und insbesondere die Trägerzähne dienen dem Eingriff in eine entsprechend geformte Gegengeometrie und können so große und wechselnde Drehmomente übertragen, was gerade bei Planetengetrieben mit nicht stehendem Hohlrad von Vorteil ist.

Gemäß einer Weiterbildung des Entkopplungsrings kann eine gedachte Verlängerungslinie der Kernzahnflanke jedes Kernzahns durch einen entsprechenden Trägerzahn verlaufen. Diese gedachte Verlängerungslinie ist bei einer ebenen Kernzahnflanke eine Gerade, also eine Verlängerungsgerade. Die Verlängerungslinie ist bei einer gewölbten Kernzahnflanke eine Kurve, bzw. eine Verlängerungskurve. Eine solche Ausführung verbessert die Stabilität des Trägerrings und verhindert Engstellen im Trägerring für einen Kraftfluss.

Erfindungsgemäß bildet jeder Kernzahn den Kern einer elastomeren Ausformung. Die Ausformung umhüllt somit den Kernzahn zumindest abschnittsweise und bedeckt ihn dort. Vorzugsweise sind Kernzahn und Ausformung in Umfangsrichtung und/oder Längsrichtung zentriert zueinander angeordnet. Der Kernzahn als Kern erhöht die Stabilität jeder Ausformung. Zudem können durch ein konstruktives Abstimmen der Paarung Ausformung/Kernzahn weitere Vorteile generiert werden. Beispielsweise kann der Kernzahn querschnittlich trapezförmig und die Ausformung querschnittlich sechseckig ausgebildet sein. In diesem Fall ist oberhalb der Kernzahnflanke in Normalenrichtung der Kernzahnflanke viel Elastomer der Ausformung anordenbar, um dort ein großes Polster zu schaffen. Durch die sechseckige Form jedoch ist auch zusätzlich ein Raum oder ein Hohlraum ausbildbar, in welchen das Elastomer im Montagezustand oder Belastungszustand gedrängt werden kann. Die elastomere Ausformung kann abschnittsweise trapezförmig ausgebildet sein und/oder sich von der Kernzahnflanke erstrecken.

Gemäß einer Weiterbildung des Entkopplungsrings kann eine Elastomerdicke über einer Kernzahnkopffläche geringer sein als über einer Kernzahnflanke. Relevant ist hier die Normalenrichtung der Kernzahnkopffläche und der Kernzahnflanke. Das Elastomer kann an der Kernzahnkopffläche eine Freifläche ausbilden. Es ist denkbar, lediglich über die Kernzahnflanken Kräfte zu leiten und den Kernzahnkopf aus dem Kraftfluss zu nehmen. Sodann kann dort die Elastomerdicke entsprechend reduziert und die Möglichkeit zur Ausbildung eines Hohlraums gegeben werden.

Gemäß einer Weiterbildung des Entkopplungsrings kann/können der Trägerring und/oder der Grundkörper mehrstückig ausgebildet sein. Die einzelnen Teile können vor oder bei der Montage zusammengesetzt werden. Dies spart Platz im Vulkanisationswerkzeug, wodurch die Kavitätenanzahl erhöht werden kann. Dieser Vorteil ergibt sich gleichermaßen auch für den Transport, da sie platzsparender angeordnet werden können.

Erfindungsgemäß wird zudem eine Baugruppe für ein Planetengetriebe vorgeschlagen, umfassend einen offenbarungsgemäßen Entkopplungsring und ein Hohlrad eines Planetengetriebes, wobei der Entkopplungsring umfangsseitig des Hohlrades angeordnet ist, und/oder ein Getriebegehäuse, wobei der Entkopplungsring am Innenumfang des Getriebegehäuses angeordnet sein kann. Die bereits oben bezüglich des Entkopplungsrings beschriebenen Vorteile ergeben sich analog für die Baugruppe, worauf hiermit verwiesen wird.

Gemäß einer Weiterbildung der Baugruppe kann der Entkopplungsring unmittelbar auf das Hohlrad vulkanisiert sein, als separates Element mittels Reibschluss und/oder Formschluss auf dem Hohlrad angeordnet sein oder über den Trägerring mit dem Hohlrad verpresst sein. Die beiden ersten Varianten bedürfen keines zusätzlichen Trägerrings. Das Elastomer kann derart ausgestaltet sein, dass nur das Hohlrad abschnittsweise stoffschlüssig mit Elastomer ummantelt ist. Die Baugruppe kann anschließend in ein die Baugruppe außenumfangsseitig umgebendes Gehäuse oder Getriebegehäuse eingepresst werden und hält dort an einer entsprechenden Gegenkontur durch eine Elastomer-Überdeckung kraftschlüssig.

Alternativ kann der Entkopplungsring unmittelbar in das Gehäuse vulkanisiert sein, als separates Element mittels Reibschluss und/oder Formschluss in dem Gehäuse angeordnet sein oder über den Trägerring mit dem Gehäuse verpresst sein. Die beiden ersten Varianten bedürfen keines zusätzlichen Trägerrings. Das Elastomer kann derart ausgestaltet sein, dass nur das Gehäuse abschnittsweise stoffschlüssig mit Elastomer ummantelt ist. Die Baugruppe kann anschließend auf ein Hohlrad aufgepresst werden und dort an einer entsprechenden Gegenkontur durch eine Elastomer-Überdeckung kraftschlüssig halten.

Erfindungsgemäß wird des Weiteren ein Planetengetriebe vorgeschlagen, umfassend einen offenbarungsgemäßen Entkopplungsring, ein Hohlrad und ein Getriebegehäuse, wobei der Entkopplungsring zwischen dem Hohlrad und dem Getriebegehäuse, welches das Hohlrad außenumfangsseitig umgibt, angeordnet sein kann. Das Planetengetriebe kann vom Typ mit feststehendem Hohlrad sein. Der Entkopplungsring verbindet und entkoppelt in vorteilhafter Weise beide Bauteile voneinander. Die bereits oben bezüglich des Entkopplungsrings beschriebenen Vorteile ergeben sich analog auch für das Planetengetriebe, worauf hiermit verwiesen wird. Gemäß einer Weiterbildung des Planetengetriebes kann die Anzahl der Ausformungen ein ganzzahliges Vielfaches der Anzahl der Planetenräder betragen. Das erfindungsgemäße Planetengetriebe kann Planetenräder umfassen. Das führt in vorteilhafter Weise dazu, dass alle Planetenräder in jeder Stellung identisch abgestützt sind, wodurch ein Rundlauf unterstützt und Schwingungen vermieden werden.

Weitere Merkmale, Einzelheiten und Vorteile der Erfindung ergeben sich aus dem Wortlaut der Ansprüche.

Es zeigen:
- Fig. 1: eine perspektivische Ansicht einer erfindungsgemäßen Baugruppe,
- Fig. 2: eine perspektivische Ansicht eines erfindungsgemäßen Entkopplungsrings nach Fig. 1,
- Fig. 3: eine Detailansicht des Entkopplungsrings nach Fig. 2,
- Fig. 4: eine Detailansicht eines Planetengetriebes mit einem Entkopplungsring einer zweiten Ausführungsform und
- Fig. 5: eine Detailansicht eines Planetengetriebes mit einem Entkopplungsring einer dritten Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

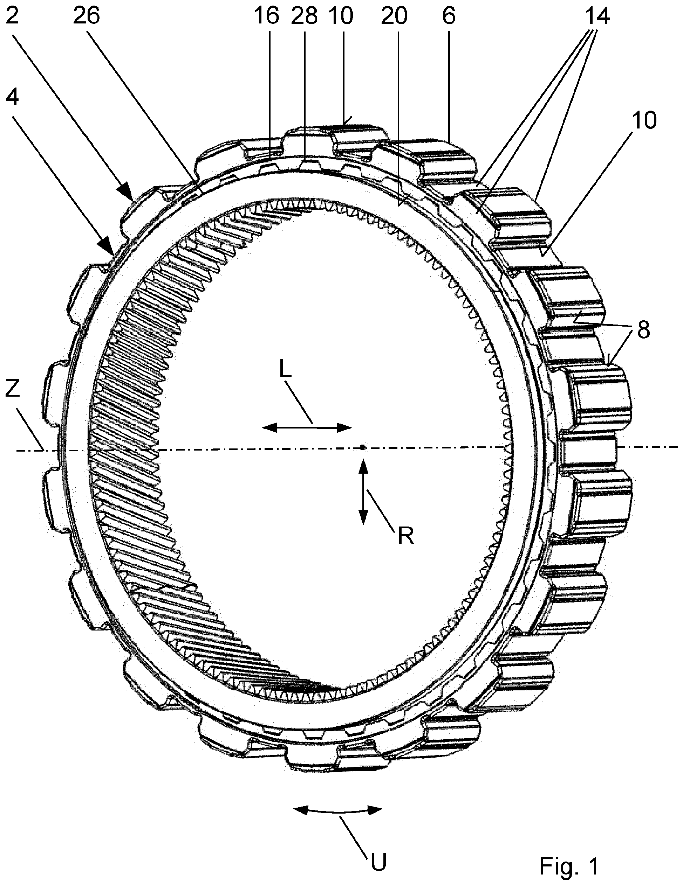

Figur 1 zeigt eine Ausführungsform einer erfindungsgemäßen Baugruppe, umfassend ein Hohlrad 26 eines Planetengetriebes und einen Entkopplungsring 2. Das Hohlrad 26 weist innenumfangsseitig in bekannter Weise Zähne für einen kämmenden Eingriff mit nicht dargestellten Planetenrädern des Planetengetriebes auf. Außenumfangsseitig weist das Hohlrad 26 in Umfangsrichtung U gleichmäßig beabstandete Basiszähne 28 auf. Das Hohlrad 26 bzw. die Baugruppe ist von einer Zentrallängsachse Z in Längsrichtung L durchgriffen.

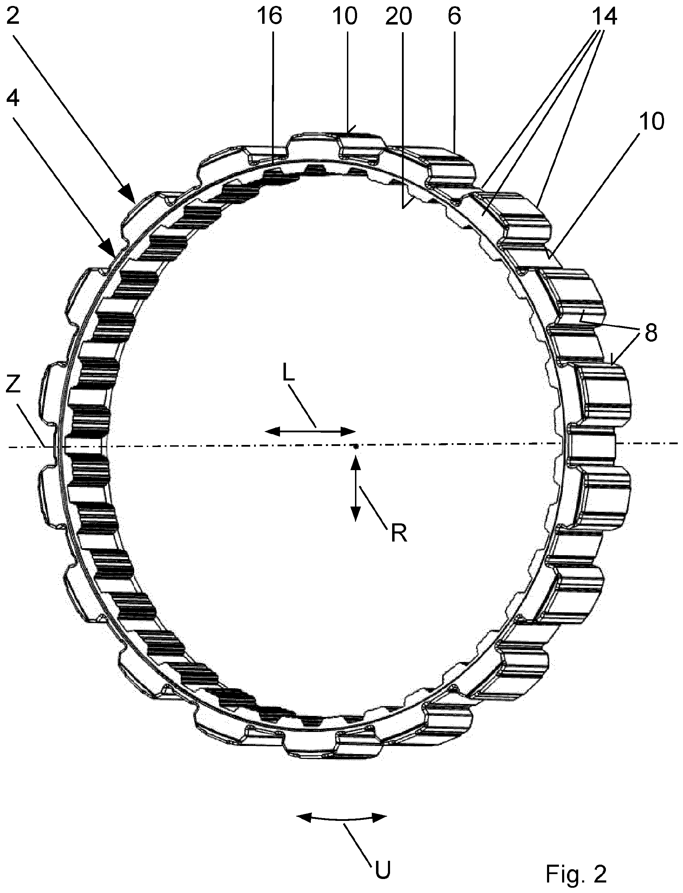

Der Entkopplungsring 2 ist umfangsseitig des Hohlrades 26 angeordnet. Er umfasst in der dargestellten ersten Ausführungsform einen elastomeren Grundkörper 4 und davon in Radialrichtung R nach außen abragende und gleichmäßig zueinander beabstandete elastomere Ausformungen 6, welche parallel zu der Zentrallängsachse Z verlaufen. Der Entkopplungsring 2 umfasst zudem einen Trägerring 16 aus einer Aluminiumlegierung. Wie Fig. 2 mit ausgeblendetem Hohlrad 26 zeigt, weist der Trägerring 16 innenumfangsseitig in Umfangsrichtung U gleichmäßig beabstandete Trägerzähne 20 auf. Die Trägerzähne 20 des Trägerrings 16 und die Basiszähne 28 des Hohlrades 26 sind in gegenseitigem Eingriff, wobei der Entkopplungsring 2 über den Trägerring 16 mit dem Hohlrad 26 verpresst ist.

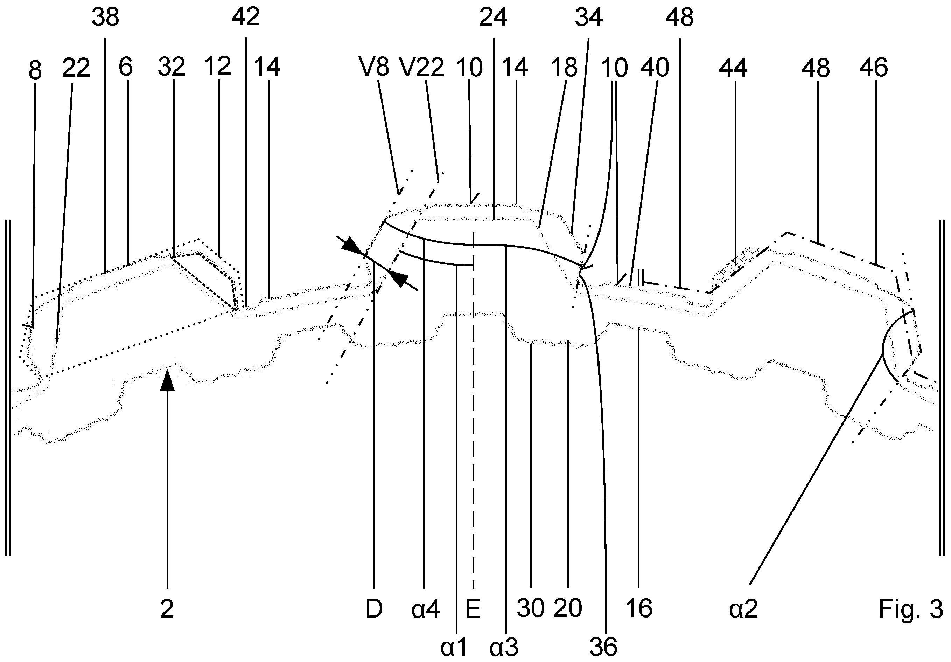

Wie Fig. 3 im Detail zeigt, weist der Trägerring 16 außenumfangsseitig in Umfangsrichtung U gleichmäßig beabstandete Kernzähne 18 auf. Da jedem Kernzahn 18 zwei Trägerzähne 20 zugeordnet sind, beträgt deren Mengenverhältnis 1:2. Die Kernzähne 18 und Trägerzähne 20 ragen in unterschiedliche Radialrichtungen R. Die Kernzähne 18 und Trägerzähne 20 weisen die querschnittliche Kontur eines Trapezes mit langer Seite am Trägerring 16 auf. Die Trägerzähne 20 weisen in Längsrichtung L verlaufende Presspassungsstege 30 auf. Drei Presspassungsstege 30 sind an der Kopfseite und jeweils zwei Presspassungsstege 30 sind an den Flanken vorgesehen. Über die Presspassungsstege 30 ist der Entkopplungsring 2 auf das Hohlrad 26 aufpressbar. Eine gedachte Verlängerungslinie V22 einer Kernzahnflanke 22 des Kernzahns 18 verläuft durch einen entsprechenden Trägerzahn 20, vorzugsweise zwischen dessen Flanke und Kopfseite. Die Kernzahnflanken 22 sind gegenüber einer Längsmittelebene E, in welcher die Zentrallängsachse Z liegt und welche die Ausformung 6 zentral durchsetzt, um einen Winkel α1 verkippt. Der Winkel α1 kann im Bereich von 10° bis 50° liegen, vorzugsweise zwischen 20° und 40°, weiter bevorzugt kann er 30° betragen. Der Winkel α1 spannt sich in positiver Weise auf zwischen der Längsmittelebene E und der Verlängerungslinie V22.

Fig. 3 zeigt zudem in einem Querschnitt durch den Entkopplungsring 2 drei identische Ausformungen 6, wobei der elastomere Grundkörper 4 mit den Ausformungen 6 auf den Trägerring 16 vulkanisiert ist. Der Trägerring 16 ist somit außenumfangsseitig vollständig elastomerbedeckt. Jeder Kernzahn 18 bildet den Kern einer elastomeren Ausformung 6, wobei beide in Umfangsrichtung U und Längsrichtung L zueinander zentriert sind. Jeder Kernzahn 18 weist die Außenkontur eines symmetrischen Trapezes auf und jede Ausformung 6 weist die Außenkontur eines gestreckten Sechsecks 12 auf, hier punktliniert dargestellt. Erkennbar ist zudem, dass die Ausformung 6 in Abschnitten jeweils über einer Kernzahnflanke 22 querschnittlich die Form eines Trapezes 32 aufweist, hier kurzstrichliniert dargestellt. Dadurch kann eine große Menge Elastomer in Normalenrichtung oberhalb der Kernzahnflanke 22 angeordnet werden, welche hier mit der Dicke D bezeichnet ist. Zudem ist die Elastomerdicke über einer Kernzahnkopffläche 24 geringer sein als über einer Kernzahnflanke 22.

Jedes Trapez 12 weist zu seinen beiden Seiten zwei kurze Seiten auf, bezeichnet als erste kurze Seite 34 und zweite kurze Seite 36. Diese Seiten 34, 36 bilden die Flanken jeder Ausformung 6. Beide Seiten 34, 36 können miteinander einen Winkel α2 im Bereich von 175° bis 90° einschließen, vorzugsweise im Bereich von 150° bis 120°, wobei er im vorliegenden Beispiel 135° beträgt. In vorteilhafter Weise schließt die zweite kurze Seite 36 mit der Längsmittelebene E einen negativen Winkel α3 ein. Die zweite kurze Seite 36 bildet daher einen Hinterschnitt aus. Die erste kurze Seite 34 schließt mit der Längsmittelebene E einen positiven Winkel α4 ein. Der Winkel α4 kann im Bereich von 10° bis 50° liegen, vorzugsweise zwischen 20° und 40°, weiter bevorzugt kann er 30° betragen. Die ersten kurzen Seiten 34 einer Ausformung 6 begrenzen eine Ausformungskopffläche 38 eines Ausformungskopfes. Die zweiten kurzen Seiten 36 benachbarter Ausformungen 6 begrenzen eine Zwischenfläche 40 des Grundkörpers 4. Jede zweite kurze Seite 36 geht über eine Hohlkehle 42 in die Zwischenfläche 40 über.

Ersichtlich ist, dass jede Ausformungskopffläche 38 und jede Zwischenfläche 40 jeweils einen Anschlagpuffer 14 aufweist. Somit umfassen Grundkörper 4 und Ausformungen 6 Anschlagpuffer 14. Diese Radialanschlagpuffer puffern in Radialrichtung R. Weitere Anschlagpuffer 14 sind in Fig. 1 gezeigt. Diese Axialanschlagpuffer sind zumindest an einer Stirnseite der Ausformungen 6 angeordnet und puffern axial in Längsrichtung L. Erkennbar ist auch, dass die Anschlagpuffer 14 als ein gegenüber einem unmittelbaren Nachbarabschnitt verdickter Elastomerabschnitt ausgebildet sind.

Jede Ausformung 6 weist zwei Presspassungsflächen 8 auf. Diese Presspassungsflächen 8 fallen zusammen mit den ersten kurzen Seiten 34. Jede Presspassungsfläche 8 ist ausgebildet, um im Montagezustand durch eine daran anliegende Gegengeometrie vorgespannt zu werden. Hierzu dient eine Elastomer-Überdeckung 44. In Fig. 3 ist an der in der Bildebene rechten Ausformung 6 ein Gehäuse oder Getriebegehäuse 46 im Montagezustand strichpunktliniert angedeutet. Das Getriebegehäuse 46 bildet eine Gegengeometrie mit einer Gegenfläche aus und liegt ausschließlich an den Presspassungsflächen 8 an. Die Presspassungsflächen 8 sind gegenüber der Längsmittelebene E um den Winkel α4 verkippt. Der Winkel α4 spannt sich in positiver Weise auf zwischen der Längsmittelebene E und einer Verlängerungslinie V8 der Presspassungsfläche 8. V8 und V22 können parallel verlaufen.

Neben den Presspassungsflächen 8 weist der Entkopplungsring 2 zudem Freiflächen 10 auf. An den Freiflächen 10 liegt im Montagezustand keine Gegengeometrie an. Eine Freifläche 10 fällt hier mit der Ausformungskopffläche 38, eine Freifläche 10 fällt mit der Zwischenfläche 40 und eine Freifläche 10 fällt mit der zweiten kurzen Seite 36 zusammen. Die Freiflächen 10 begrenzen mit der Gegengeometrie jeweils einen Hohlraum 48. Durch den negativen Winkel α3 kann der Hohlraum 48 zwischen benachbarten Ausformungen 6 groß ausgebildet werden.

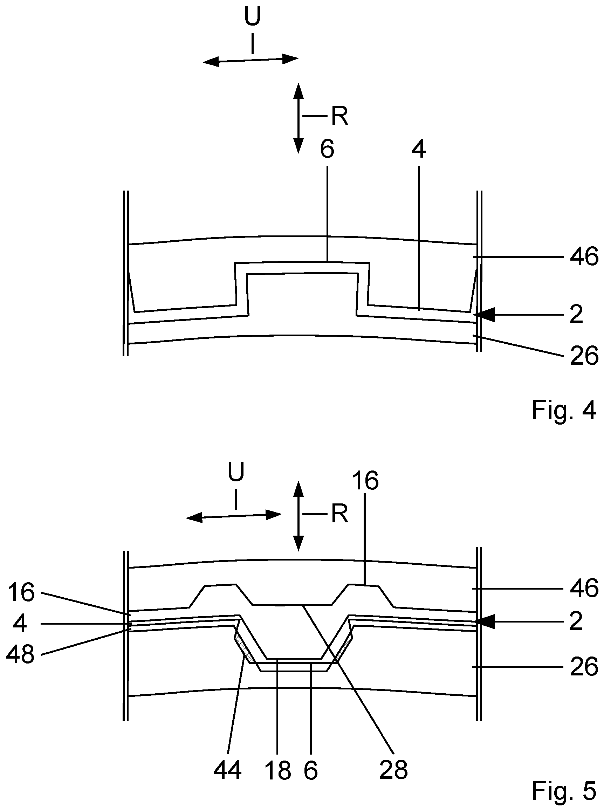

Die Fig. 4 und 5 sind schematisch stark vereinfacht und sollen weitere Ausgestaltungen im Grundsatz am Beispiel einer einzigen Ausformung 6 aufzeigen. Die innenumfangsseitig vorhandenen Zähne des Hohlrands 26 sind ausgeblendet. In Fig. 4 umfasst der Entkopplungsring 2 keinen Trägerring 16. Der Entkopplungsring 2 ist an das Hohlrad 26 oder das Getriebegehäuse 46 anvulkanisiert oder als separates Element mittels Reibschluss und/oder Formschluss an dem Hohlrad 26 und/oder dem Getriebegehäuse 46 angeordnet. Der Entkopplungsring 2 folgt mit seinem Querschnittsverlauf dem aus Rechtecken gebildeten Konturverlauf von Hohlrad 26 und Getriebegehäuse 46. Hohlräume 48 zwischen Entkopplungsring 2 und Hohlrad 26 und/oder Getriebegehäuse 46 sind nicht eingezeichnet, können jedoch durchaus vorgesehen sein.

Fig. 5 zeigt prinzipiell die Ausführungsform der Fig. 1 bis 3, jedoch in radialgetauschter Richtung. Der Entkopplungsring 2 weist den Trägerring 16 nun nicht innen- sondern außenumfangsseitig auf. Folglich ist der Entkopplungsring 2 über den Trägerring 16 mit dem Getriebegehäuse 46 verpresst.

Die Erfindung ist nicht auf eine der vorbeschriebenen Ausführungsformen beschränkt, sondern in vielfältiger Weise abwandelbar. Sämtliche aus den Ansprüchen hervorgehenden Merkmale und Vorteile, einschließlich konstruktiver Einzelheiten, räumlicher Anordnungen und Verfahrensschritten, können so wie durch die Ansprüche definiert erfindungswesentlich sein.

In den Rahmen der Erfindung fallen sämtliche Kombinationen wie durch die Ansprüche definiert.

### Bezugszeichenliste

| | | | |
|---|---|---|---|
| 2 | Entkopplungsring | D | Dicke |
| 4 | Grundkörper | E | Längsmittelebene |
| 6 | Ausformung | L | Längsrichtung |
| 8 | Presspassungsfläche | R | Radialrichtung |
| 10 | Freifläche | U | Umfangsrichtung |
| 12 | Sechseck | V8 | Verlängerungslinie |
| 14 | Anschlagpuffer | V22 | Verlängerungslinie |
| 16 | Trägerring | Z | Zentrallängsachse |
| 18 | Kernzahn | | |
| 20 | Trägerzahn | α1 | Winkel |
| 22 | Kernzahnflanke | α2 | Winkel |
| 24 | Kernzahnkopffläche | α3 | Winkel |
| 26 | Hohlrad | α4 | Winkel |
| 28 | Basiszahn | | |
| 30 | Presspassungssteg | | |
| 32 | Trapez | | |
| 34 | erste kurze Seite | | |
| 36 | zweite kurze Seite | | |
| 38 | Ausformungskopffläche | | |
| 40 | Zwischenfläche | | |
| 42 | Hohlkehle | | |
| 44 | Elastomer-Überdeckung | | |
| 46 | Getriebegehäuse | | |
| 48 | Hohlraum | | |

## Patentansprüche

1. Entkopplungsring für ein Planetengetriebe, umfassend
einen ringförmigen elastomeren Grundkörper (4), und
gleichmäßig zueinander beabstandete und in Radialrichtung (R) vom Grundkörper (4) abragende elastomere Ausformungen (6), welche parallel zu einer den Entkopplungsring (2) zentral durchsetzenden Zentrallängsachse (Z) verlaufen, wobei der Entkopplungsring (2) umfangsseitig eines Hohlrades (26) eines Planetengetriebes anordenbar ist, wobei die Ausformungen (6) zumindest eine Presspassungsfläche (8) aufweisen, über welche sie presspassend an einem Bauteil anliegen können,
wobei der Entkopplungsring innenumfangsseitig oder außenumfangsseitig einen Trägerring (16) umfasst, auf welchem der elastomere Grundkörper (4) mit den Ausformungen (6) angeordnet ist,
wobei der Trägerring (16) außenumfangsseitige oder innenumfangsseitige Kernzähne (18) umfasst,
wobei jeder Kernzahn (18) den Kern einer elastomeren Ausformung (6) bildet.

2. Entkopplungsring nach Anspruch 1, **dadurch gekennzeichnet, dass** die zumindest eine Presspassungsfläche (8) gegenüber einer Längsmittelebene (E) des Entkopplungsrings (2) um einen Winkel (α4) verkippt verläuft.

3. Entkopplungsring nach einem der vorangehenden Ansprüche, **dadurch gekennzeichnet, dass** der elastomere Grundkörper (4) mit den Ausformungen (6) auf den Trägerring (16) vulkanisiert ist.

4. Entkopplungsring nach einem der vorangehenden Ansprüche, **dadurch gekennzeichnet, dass** der Trägerring (16) innenumfangsseitige oder außenumfangsseitige Trägerzähne (20) umfasst, wobei das Mengenverhältnis der Kernzähneanzahl zur Trägerzähneanzahl vorzugsweise 1:2 beträgt.

5. Entkopplungsring nach Anspruch 4, **dadurch gekennzeichnet, dass** eine Verlängerungslinie (V22) der Kernzahnflanke (22) jedes Kernzahns (18) durch einen entsprechenden Trägerzahn (20) verläuft.

6. Baugruppe für Planetengetriebe, umfassend einen Entkopplungsring (2) nach einem der vorangehenden Ansprüche 1 bis 5 und ein Hohlrad (26) eines Planetengetriebes, wobei der Entkopplungsring (2) umfangsseitig des Hohlrades (26) angeordnet ist, und/oder ein Getriebegehäuse (46), wobei der Entkopplungsring am Innenumfang des Getriebegehäuses (46) angeordnet ist.

7. Planetengetriebe, umfassend einen Entkopplungsring (2) nach einem der vorangehenden Ansprüche 1 bis 5, ein Hohlrad (26) und ein Getriebegehäuse (46), wobei der Entkopplungsring (2) zwischen dem Hohlrad (26) und dem Getriebegehäuse (46), welches das Hohlrad (26) außenumfangsseitig umgibt, angeordnet ist.

8. Planetengetriebe nach Anspruch 7, **dadurch gekennzeichnet, dass** die Anzahl der Ausformungen (6) ein ganzzahliges Vielfaches der Anzahl der Planetenräder beträgt.

## Claims

1. Decoupling ring for a planetary gear, comprising
an annular elastomeric base body (4), and
uniformly spaced elastomeric shapes (6) projecting radially (R) from the base body (4), which run parallel to a central longitudinal axis (Z) passing through the centre of the decoupling ring (2), wherein the decoupling ring (2) can be arranged on the circumference of a ring gear (26) of a planetary gear, wherein the shapes (6) have at least one press-fit surface (8) via which they can press-fit against a component,
wherein the decoupling ring comprises a carrier ring (16) on the inner circumference or outer circumference, on which the elastomeric base body (4) with the shapes (6) is arranged,
wherein the carrier ring (16) comprises core teeth (18) on the outer circumference or inner circumference,
wherein each core tooth (18) forms the core of an elastomeric shape (6).

2. Decoupling ring according to claim 1, **characterised in that** the at least one press-fit surface (8) is tilted by an angle (α4) relative to a longitudinal centre plane (E) of the decoupling ring (2).

3. Decoupling ring according to one of the preceding claims, **characterised in that** the elastomeric base body (4) with the shapes (6) is vulcanised onto the carrier ring (16).

4. Decoupling ring according to one of the preceding claims, **characterised in that** the carrier ring (16) comprises carrier teeth (20) on the inner circumference or outer circumference, wherein the ratio of the number of core teeth to the number of carrier teeth is preferably 1:2.

5. Decoupling ring according to claim 4, **characterised in that** an extension line (V22) of the core tooth flank (22) of each core tooth (18) runs through a corresponding carrier tooth (20).

6. Assembly for planetary gears, comprising a decoupling ring (2) according to one of the preceding claims 1 to 5 and a ring gear (26) of a planetary gear, wherein the decoupling ring (2) is arranged on the circumference of the ring gear (26), and/or a gearbox housing (46), wherein the decoupling ring is arranged on the inner circumference of the gearbox housing (46).

7. Planetary gear comprising a decoupling ring (2) according to one of the preceding claims 1 to 5, a ring gear (26) and a gearbox housing (46), wherein the decoupling ring (2) is arranged between the ring gear (26) and the gearbox housing (46), which surrounds the ring gear (26) on the outer circumference.

8. Planetary gear according to claim 7, **characterised in that** the number of shapes (6) is an integer multiple of the number of planetary gears.

## Revendications

1. Bague de découplage pour un engrenage planétaire, comprenant un corps de base (4) annulaire en élastomère, et
des formes élastomères (6) espacées de manière régulière les unes des autres et faisant saillie dans la direction radiale (R) à partir du corps de base (4), lesquelles s'étendent parallèlement à un axe longitudinal central (Z) traversant la bague de découplage (2) de manière centrale, la bague de découplage (2) pouvant être disposée sur le pourtour d'une couronne dentée (26) d'un engrenage planétaire, les formes (6) présentant au moins une surface d'ajustement serré (8) par l'intermédiaire de laquelle elles peuvent s'appuyer par ajustement serré contre un composant,
la bague de découplage comprenant, sur son pourtour intérieur ou extérieur, une bague de support (16) sur laquelle est disposé le corps de base élastomère (4) avec les formes (6),
la bague de support (16) comprenant des dents centrales (18) sur le côté périphérique extérieur ou sur le côté périphérique intérieur,
chaque dent centrale (18) formant le noyau d'une forme élastomère (6).

2. Bague de découplage selon la revendication 1, **caractérisée en ce que** la au moins une surface d'ajustement serré (8) est inclinée d'un angle (α4) par rapport à un plan médian longitudinal (E) de la bague de découplage (2).

3. Bague de découplage selon l'une des revendications précédentes, **caractérisée en ce que** le corps de base élastomère (4) avec les formes (6) est vulcanisé sur la bague de support (16).

4. Bague de découplage selon l'une des revendications précédentes, **caractérisée en ce que** la bague de support (16) comprend des dents de support (20) sur le pourtour intérieur ou extérieur, le rapport entre le nombre de dents centrales et le nombre de dents de support étant de préférence de 1:2.

5. Bague de découplage selon la revendication 4, **caractérisée en ce qu'**une ligne de prolongement (V22) du flanc de dent centrale (22) de chaque dent centrale (18) passe par une dent de support correspondante (20).

6. Ensemble pour engrenage planétaire, comprenant une bague de découplage (2) selon l'une des revendications 1 à 5 précédentes et une couronne dentée (26) d'un engrenage planétaire, la bague de découplage (2) étant disposée sur le pourtour de la couronne dentée (26), et/ou un carter d'engrenage (46), la bague de découplage étant disposée sur la circonférence intérieure du carter d'engrenage (46).

7. Engrenage planétaire comprenant une bague de découplage (2) selon l'une des revendications 1 à 5 précédentes, une couronne dentée (26) et un carter d'engrenage (46), la bague de découplage (2) étant disposée entre la couronne dentée (26) et le carter d'engrenage (46) qui entoure la couronne dentée (26) du côté de la circonférence extérieure.

8. Engrenage planétaire selon la revendication 7, **caractérisé en ce que** le nombre de formes (6) est un multiple entier du nombre de roues planétaires.
